# EUROPÄISCHE PATENTSCHRIFT

(11) **EP 1 573 527 B1**
(45) Veröffentlichungstag und Bekanntmachung des Hinweises auf die Patenterteilung: **01.09.2010**
(21) Anmeldenummer: 03767812.5
(22) Anmeldetag: 17.12.2003
(51) Int. Cl.: G06F 9/445, H04L 29/08

(54) **ORTSGEBUNDENE ANPASSUNG EINER INTELLIGENTEN EINHEIT**
LOCATION-SPECIFIC ADAPTATION OF AN INTELLIGENT UNIT
ADAPTATION LOCALE D'UNE UNITE INTELLIGENTE

(30) Priorität: 19.12.2002 DE 10259391
(43) Veröffentlichungstag der Anmeldung: 14.09.2005
(73) Patentinhaber: PHOENIX CONTACT GmbH & Co. KG, 32825 Blomberg (DE)
(72) Erfinder: KALHOFF, Johannes, 32825 Blomberg (DE); ERHARD, Bruno, 32825 Blomberg (DE); MEYER-GRÄFE, Karsten, 33161 Hövelhof (DE); STALLMANN, Oliver, 32257 Bünde (DE); GAST, Torsten, 31855 Aerzen (DE); SCHÖNHERR, Dietmar, 32657 Lemgo (DE); PISTORIUS, Michael, 32758 Detmold (DE)
(74) Vertreter: Bill, Burkart Hartmut
(86) Internationale Anmeldenummer: PCT/EP2003/014370
(87) Internationale Veröffentlichungsnummer: WO 2004/057466

(56) Entgegenhaltungen:
- WO-A-01/59559
- DE-A- 10 159 398
- DE-U- 29 706 969
- US-A1- 2001 044 857
- US-B1- 6 177 860

## Beschreibung

Die Erfindung betrifft Verfahren und Vorrichtungen zur Anpassung einer intelligenten Einheit.

Herkömmlicherweise werden insbesondere bei Netzwerksystemen, die einem Standard folgen, Teilnehmer heutzutage über Adressen angesprochen. Hierbei erhalten die Teilnehmer oder Netzwerkkomponenten die notwendigen Adressen in der Regel über Adressenschalter, die beispielsweise auf den entsprechenden Geräten angebracht oder in Steckern zum Anschalten der Teilnehmer integriert sind oder indirekt über eine der Seriennummer zugeordnete Adresse, wie dies beispielsweise beim Ethernet der Fall ist, und dem Herunterladen von entsprechenden Parametern.

Insbesondere bei Netzwerksystemen, welche direkt oder indirekt Aufgabenbereiche der Sicherheitstechnik betreffen, reichen diese Informationen jedoch häufig nicht aus, um einen sicheren Applikationsbezug und/oder Ortsbezug herzustellen. Aus diesem Grund werden sicherheitstechnische Teilnehmer, wie zum Beispiel bestimmte Anlagenkomponenten oder intelligente Einheiten derzeit herkömmlicherweise mit zusätzlichen Adressen oder Konfigurationsmöglichkeiten ausgestattet. Diese Zusätze führen jedoch insbesondere im Austauschfall der Teilnehmer zu weiteren bzw. zusätzlichen Handhabungsnachteilen, wie beispielsweise einer definierten Anweisung für den Austauschfall, sowie zu einem erneuten Prüfen der Applikation vor Ort.

Eine einfache "Plug & Play" Lösung ist zur Zeit nicht verfügbar.

Aus der deutschen Offenlegungsschrift DE-U1 198 51 473 ist bekannt, eine Kodierung und Verifizierung einer mechanisch verbindbaren Anlagenkomponente für bzw. durch eine Steuereinheit mittels einem der Komponente zugeordneten Steckverbinder, der eine Kodiereinrichtung umfasst und einem zweiten Steckverbinder durchzuführen, der mit einer, der Steuereinheit zugeordneten elektronischen Schaltung verbunden ist. Beim Zusammenfügen der beiden Steckverbinder wird gemäß Offenbarung ein Signal an die der Komponente zugeordnete Kodiereinrichtung übertragen, welche unter Ansprechung des empfangenen Signals ein kodiertes Signal auslöst und an die elektronische Schaltung zur identifizierenden Auswertung rücküberträgt. Eine ähnliche Komponente wird in dem deutschen Gebrauchsmuster DE 29706969 U1 beschrieben.

Folglich ist die Kodiereinrichtung, auf deren Basis somit eine Art applikations- bzw. ortsbasierte Verifizierung der Anlagenkomponente,durch die elektronische, der Steuereinheit zugeordneten Schaltung durchgeführt wird, jedoch der anzuschaltenden Komponente selbst zugeordnet. Eine, wie vorstehend beschrieben, einfache "Plug & Play" Lösung ist somit nicht gewährleistet, sondern vielmehr wird eine Lösung nach dem "Trial & Error" Prinzip beschrieben.

Eine Aufgabe der Erfindung ist es somit, einen Weg aufzuzeigen, mit welchem vorstehend diskutierte Probleme und Nachteile des Standes der Technik überwunden werden und insbesondere bei netzwerkfähigen intelligenten Einheiten eine auf der jeweiligen Applikation und/oder dem jeweiligen Einbauort basierte Konfiguration und/oder Parametrierung der intelligenten Einheiten zur Gewährleistung einer sicheren und somit einfachen Zuordnung im Wesentlichen ohne weitere Schritte sichergestellt wird.

Die erfindungsgemäße Lösung der Aufgabe ist durch ein Verfahren mit den Merkmalen nach Anspruch 1, durch eine Vorrichtung mit den Merkmalen des Anspruchs 7 und/oder einem System mit den Merkmalen des Anspruchs 23 wiedergegeben.

Vorteilhafte und/oder bevorzugte Ausführungsformen bzw. Weiterbildungen sind Gegenstand der jeweiligen abhängigen Ansprüche.

Erfindungsgemäß ist somit zur Anpassung einer intelligenten Einheit vorgesehen, einer definierten Applikation und/oder einem definierten Ort eine Konfigurationseinrichtung zuzuordnen, in welchem applikations- und/oder ortsbasierte Konfigurationsdaten und/oder Verhaltensbeschreibungsdaten speicherbar sind, so dass Daten von der Konfigurationseinrichtung an eine Logik zum Verarbeiten von Daten zur Konfiguration und/oder Parametrierung der intelligenten Einheit übertragbar sind.

Da die Erfindung somit mittels der Konfigurationseinrichtung erstmalig eine sichere Zuordnung zwischen Einbauort einer solchen intelligenten Einheit und der Kommunikationsverbindung und/oder der Parametrierung der intelligenten Einheit ermöglicht, ist insbesondere auf Gebieten der Sicherheitstechnik sichergestellt, z.B. beim Wechseln einer Einheit bereits durch vorheriges Auslesen der in der Konfigurationseinrichtung gespeicherten Daten, dass eine auszuwechselnde Einheit weiterhin die erwartete Eigenschaft in der entsprechenden Applikation erfüllt. Bevorzugt sieht die Erfindung vor, die intelligente Einheit mit einer zugeordneten Logik zum Verarbeiten von Daten zur Konfiguration der Intelligente Einheit bereitzustellen, diese basierend auf der definierten Applikation und/oder dem definierten Ort entsprechend mit der Anlage zu koppeln und mit der Konfigurationseinrichtung zum Übertragen von Daten von der Konfigurationseinrichtung an die der intelligenten Einheit zugeordneten Logik zu verbinden.

Da folglich die Konfigurationseinrichtung der Applikation bzw. dem Anbindungsort der intelligenten Einheit zugeordnet ist und die intelligente Einheit basierend auf der zugeordneten Logik die entsprechenden Konfigurationsdaten und/oder Verhaltensbeschreibungsdaten zur Konfiguration und/oder Parametrierung der intelligenten Einheit applikations- bzw. ortsbasierend bereitgestellt bekommt, wird eine Verbindung zwischen dem Einbauort, der Eigenschaft der intelligenten Einheit und dem Ansprechen der Einheit gewährleistet.

In besonders bevorzugter Weiterbildung ist erfindungsgemäß folglich ferner vorgesehen, dass die applikations- und/oder ortsbasierten Daten eine Adresse, eine Komponentenkennung, Parametrierungsdaten und/oder Informationen zur Parametrierung umfasst.

Eine spezifische Adressierung der jeweiligen Einheit ist somit im Wesentlichen nicht mehr notwendig, da dies über die erfindungsgemäße applikations- und/oder ortsbasierte Konfigurationseinrichtung erfolgt und die Anlage und/oder das Gesamtsystem folglich über eine sichere Adressierung der intelligente Einheiten verfügt und entsprechend die Kommunikationsverbindung zwischen den intelligente Einheiten im Falle netzwerkfähiger Komponenten organisiert.

Folglich ist in besonders bevorzugter Weiterbildung ferner vorgeschlagen, dass eine die zugeordnete Logik zum Verarbeiten von Konfigurationsdaten aufweisende intelligente Einheit, welche mit der einer definierten Applikation und/oder einem definierten Ort zugeordneten Konfigurationseinrichtung zum Speichern von applikations- und/oder ortsbasierten Daten zum Übertragen von Daten zumindest von dem Konfigurationseinrichtung an die Logik verbindbar ist, bevorzugt innerhalb eines Netzwerkes einbindbar ist. Vorteilhafter Weise ist die erfindungsgemäße Adaption applikations- und/oder ortsbasierter Eigenschaften der intelligente Einheit jedoch nicht nur bei netzwerkfähigen sondern auch bei nicht netzwerkfähigen Komponenten sicherstellbar.

In weiterer bevorzugter Ausführungsform ist die einer definierten Applikation und/oder einem definierten Ort zuordenbare Konfigurationseinrichtung derart angepasst und mit einer die zugeordnete Logik umfassenden intelligenten Einheit verbindbar, dass ferner Daten der intelligenten Einheit an das Konfigurationseinrichtung übertragen und dort gespeichert werden, im Wesentlichen das Konfigurationseinrichtung somit ferner zum Empfangen als auch zum Speichern von Daten von der der intelligenten Einheit zugeordneten Logik ausgebildet ist, und/oder die der intelligenten Einheit zugeordnete Logik zur Datenübertragung an die Konfigurationseinrichtung ausgebildet ist.

Insbesondere, wenn gemäß besonders bevorzugter Ausführungsformen die Konfigurationseinrichtung je nach spezifischer Anwendung zum Speichern, Auslesen und/oder Verarbeiten von weiteren Daten ausgebildet ist, ist auf einfachste Weise ein Datenabgleich zwischen der intelligenten Einheit und der Konfigurationseinrichtung durchführbar, wobei beispielsweise auch Laufzeitinformationen einbeziehbar sind.

In besonders bevorzugter Weiterbildung ist ferner vorgeschlagen, dass die Daten der Konfigurationseinrichtung ferner ferngesteuert und/oder extern veränderbar, auslesbar und/oder verarbeitbar sind, um auf einfachste Weise einen Datenzugriff, beispielsweise zur Durchführung eines Up- oder Download-Prozesses für im Wesentlichen jede Eingabe-/Ausgabestation auf einfachste Weise zu gewährleisten.

Um eine vielseitige Anwendung der Erfindung zu ermöglichen, sieht die Erfindung in Praktischer Weiterbildung ferner vor, dass die Schritte des Speicherns und/oder des Übertragens der applikations- und/oder ortsbasierten Konfigurationsdaten im Wesentlichen einmalig, insbesondere nach dem Einbinden und/oder Austauschen einer intelligenten Einheit durchführbar sind und/oder mehrmalig, insbesondere zur Sicherstellung einer Aktualisierung oder Adaption der Konfigurationsdaten nach wählbaren Zeitintervallen erfolgen.

Das Speichern und/oder das Übertragen dieser Daten erfolgt hierbei in zweckmäßiger Ausführung in gesicherter Form, beispielsweise unter Verwendung eines CRC-Verfahrens (cyclic redundancy check).

In anwendungsspezifisch zweckmäßiger Ausgestaltung ist die Konfigurationseinrichtung somit insbesondere als Betriebsmittel für eine Automatisierungsanlage und/oder die intelligente Einheit eine Anlagenkomponente umfasst, wobei die erfindungsgemäße Bereitstellung der Konfigurationsdaten und/oder die Logik zum Verarbeiten von Konfigurationsdaten anwendungs- und/oder herstellungspezifisch Hardware- und/oder Softwareelemente umfassen.

In bevorzugter Weise sieht die Erfindung darüber hinaus vor, dass die Konfigurationseinrichtung fest oder lösbar mit dem Kopplungsort der intelligenten Einheit verbunden ist, wobei in einfachster Form bereits eine am Kopplungsort angeordnete Tafel, beispielsweise mit einem die Orts- und/oder Applikationbasierte Funktion der intelligenten Einheit betreffende Daten aufweisenden Bar-Code, ausreichend ist. In zweckmäßiger Weise ist ferner vorgeschlagen, die Konfigurationseinrichtung als Teil einer stehenden Verdrahtung, an welche die Intelligente Einheit koppelbar ist, auszubilden und/oder die Konfigurationseinrichtung einer am Kopplungsort der intelligenten Einheit angeordneten Verbindungseinrichtung zum Verbinden der Intelligente Einheit zuzuordnen.

Zur Herstellung der Verbindung zwischen der Konfigurationseinrichtung und der intelligenten Einheit und/oder der Logik sind in bevorzugter Weise jeweils komplementär ausgebildete Mittel vorgesehen, die eine uni- und/oder bidirektionale Datenübertragungsverbindung gewährleisten. Erfindungsgemäß ist hierbei vorgesehen, dass die komplementär ausgebildeten Mittel hierbei bevorzugt optische- und/oder Funkverbinder umfassen. Anwendungsspezifisch sind in zweckmäßiger Ausführungsform ferner kontaktgebundene, schraub- oder steckbare Verbinder vorgeschlagen.

Die Erfindung schlägt hierbei in vorteilhafter Weise anwendungsspezifische Ausführungen vor, bei denen die der Konfigurationseinrichtung zugeordnete Logik Teil der Konfigurationseinrichtung oder Teil einer weiteren, mit der Konfigurationseinrichtung verbindbaren Einrichtung, insbesondere einer zentralen Steuerungseinrichtung ist.

Die Erfindung umfasst ferner die Verwendung einer erfindungsgemäßen Vorrichtung zur Durchführung des erfindungsgemäßen Verfahrens sowie ein System mit wenigstens einer erfindungsgemäßen Vorrichtung, insbesondere zum Betreiben einer Automatisierungsanlage.

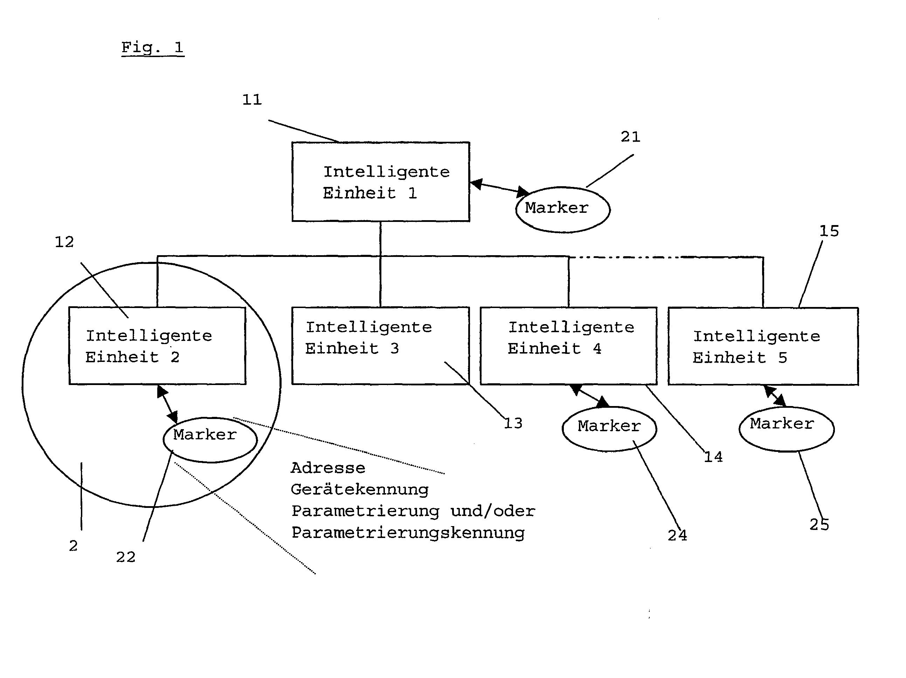

Die Erfindung wird nachfolgend detaillierter anhand eines bevorzugten Ausführungsbeispiels unter Bezugnahme auf die beigefügte Zeichnung beschrieben, in welcher
- Fig. 1: eine stark vereinfachte Prinzipskizze eines Systems zum Betreiben einer Automatisierungsanlage umfassend mehrere erfindungsgemäße Konfigurationseinrichtungen, die jeweils mit einer intelligenten Einheit zu deren ortsgebundener Anpassung in Verbindung stehen.

Bezugnehmend auf Fig. 1 sind erfindungswesentliche Elemente eines Standardnetzwerksystems zum Betreiben einer Automatisierungsanlage in stark vereinfachter Weise dargestellt.

Im Einzelnen zeigt Fig. 1 eine Anzahl von intelligenten Einheiten 11, 12, 13, 14 und 15, die für definierte Applikationen und/oder an definierten Positionen des Netzwerkes vorgesehen sind. Beispielsweise ist die in Fig. 1 mit dem Bezugszeichen 12 gekennzeichnete intelligente Einheit 2 für den mit dem Bezugszeichen 2 gekennzeichneten Applikationsort vorgesehen.

Die intelligenten Einheiten 11, 12, 13, 14 und 15, umfassen somit jeweils anlagenspezifische Anlagenkomponenten, wie beispielsweise Sensoren und/oder Aktoren, und weisen ferner eine zugeordnete, nicht näher dargestellte Logik zum Verarbeiten von Daten zur Konfiguration und/oder Parametrierung auf.

Zur sicheren Adressierung dieser intelligenten Einheit 2 und folglich zur Organisation der Kommunikationsverbindung zwischen den einzelnen intelligenten Einheiten 11, 12, 13, 14 und 15 ist dem Applikationsort 2 eine in der Fig. 1 mit dem Bezugszeichen 22 gekennzeichnete Konfigurationseinrichtung, ein sogenannter Marker, zugeordnet, in welchem applikations- und/oder ortsbasierte Konfigurationsdaten gespeichert sind. Entsprechend sind an den Applikationsorten der weiteren intelligenten Einheiten 11, 14 und 15 in vergleichbarer Weise derartige Marker 21, 24 und 25 angeordnet, welche die für die jeweilige Applikation bzw. den jeweiligen Applikationsort spezifischen Daten umfassen.

Über einen solchen Marker 21, 22, 24 oder 25 wird insbesondere eine Gerätenummer der jeweiligen intelligenten Einheit 11, 12, 14 bzw. 15 zugeordnet, wie beispielsweise eine Adresse für die sichere Kommunikation und/oder die Gerätekennung, welches also eine feste Eigenschaft des anzuschaltenden Gerätes bzw. der einzubindenden intelligenten Einheit darstellt. Atlernativ oder ergänzend ist vorgesehen, über einen solchen Marker 21, 22, 24 oder 25 eine applikationsortspezifische Geräteparametrierung durchzuführen, also im Wesentlichen variable Eigenschaften der anzuschaltenden intelligenten Einheiten mit diesen zu verbinden, wie z.B. applikationsortspezifische Daten zur Beschreibung des erwarteten Verhaltens und/oder der Funktion der anzuschaltenden intelligenten Einheit mittels des Markers vorzugeben.

Der Marker 21, 22, 24 oder 25 beinhaltet im vorliegenden Beispiel somit anwendungsspezifisch eine feste oder ladbare Konfiguration, die mittels Hardware, beispielsweise über Schalter oder eine Schaltung, und/oder mittels Software den Erfordernissen entsprechend vorgebbar ist.

Die als Marker 21, 22, 24 oder 25 bezeichnete Konfigurationseinrichtung ist erfindungsgemäß mit dem Applikationsort bevorzugt fest, beispielsweise als Teil der stehenden Verdrahtung des Applikationsortes verbunden. Je nach Anwendung ist jedoch auch vorgesehen, erfindungsgemäße Konfigurationseinrichtungen austauschbar mit dem Applikationsort zu verbinden, beispielsweise über eine Steck- oder Schraubverbindung.

Die Verbindung mit der intelligenten Einheit selbst, bei Fig. 1 jeweils mit einem Doppelpfeil gekennzeichnet, erfolgt hierbei in einfachster Weise durch Anschrauben oder Aufstecken eines Markers 21, 22, 24 oder 25 an bzw. auf die Komponente 11, 12, 14 bzw. 15, wobei eine elektrische Verbindung zur Datenübertragung zumindest an die jeweilige Logik insbesondere kontaktgebunden herzustellen ist.

Die Konfigurationseinrichtung weist hierzu zweckmäßiger Weise einen zum Ankoppeln der intelligenten Einheit entsprechend ausgebildeten Stecker auf.

In alternativer Ausführung ist jedoch insbesondere auch vorgesehen, eine zum Datenaustausch geeignete Verbindung über komplementär ausgebildete optische- und/oder Funkverbinder herzustellen.

In zweckmäßig einfachster Ausführung ist der Marker hierbei in Form einer Tafel oder eines Aufklebers am Applikationsort angeordnet, wobei ein orts- und/oder applikationsbasierte Adaptionssdaten aufweisender Bar-Code durch ein Lesegerät scannbar ist.

Die erfindungsgemäße Konfigurationseinrichtung ist somit stets dem Applikationsort einer Intelligente Einheit zugeordnet und enthält alle notwendigen Daten, wie die Adresse, eine Gerätekennung, Daten betreffend die orts- und/oder applikationbasierte Funktion und/oder Information einer Parametrierung bzw. die Parametrierungsdaten und/oder Teile hiervon, so dass die intelligente Einheit die zu ihrer eigenen Parametrierung notwendige Adresse und/oder Parametrierungsinformationen aus dem Marker liest und/oder beispielsweise zum Datenabgleich bevorzugt auch Informationen bzw. Daten an die Konfigurationseinrichtung überträgt.

Zweckmäßiger Weise sind somit die Konfigurationseinrichtung und/oder die intelligente Einheit derart ausgebildet, dass sowohl upload- und/oder ein download-Prozesse zwischen beiden Einheiten durchführbar sind.

Im Austauschfall, also wenn die intelligente Einheit 11, 12, 13, 14 oder 15 ausgetauscht wird, verbleibt der Marker 21, 22, 24 bzw. 25 somit am Applikationsort und wird nach Austausch mit der entsprechend neuen intelligenten Einheit verbunden. Die ortsgebundenen Kommunikations- und Komponenteneigenschaften werden somit über den Marker mit der ausgetauschten Einheit ohne zusätzliche Eingriffe auf anwendungsspezifische Art und Weise abgeglichen. Eine Konfiguration der ausgewechselten Einheit über zusätzliche Eingriffe, beispielsweise über die Engineering Umgebung ist somit nicht mehr notwendig. Nach dem erfolgten Datenabgleich kann somit der sichere Betrieb automatisch erfolgen, da eine ausgewechselte Komponente weiterhin die erwartete Eigenschaft, insbesondere die gewünschten technischen Merkmale und/oder die Parametrierung der Komponente in der jeweiligen Applikation erfüllt, wobei eine Verbindung zwischen dem Einbauort, der Eigenschaft der Komponente und dem Ansprechen der Komponente gewährleistet bleibt.

Das Speichern und/oder das Übertragen dieser Daten erfolgt hierbei in zweckmäßiger Ausführung in gesicherter Form, beispielsweise unter Verwendung eines CRC-Verfahrens.

Die Erfindung gewährleistet somit eine ortsgebundene Konfiguration und/oder Parametrierung von intelligenten Einheiten, also im Wesentlichen intelligente System- und/oder Anlagenkomponenten, wie Sensoren oder Aktoren, welche eine Verarbeitungslogik umfassen und stellt in Folge die Zuordnung zu einer Applikation und/oder einem definierten Einbauort sicher, welches insbesondere im Umfeld der Sicherheitstechnik eine zu gewährleistende Anforderung darstellt. Mit anderen Worten erlaubt die erfindungsgemäße Vorrichtung bzw. das erfindungsgemäße Verfahren eine sichere Zuordnung zwischen Einbauort einer derartigen intelligente Einheit und der Kommunikationsverbindung und/oder der Parametrierung dieser Komponenten, welches eine wesentliche Basis für eine sichere Kommunikation zwischen netzwerkfähigen Einheiten darstellt.

Es sei jedoch darauf hingewiesen, dass die Sicherstellung der Eigenschaft der intelligenten Einheiten auch bei nichtnetzwerkfähigen intelligente Einheiten gegeben ist. Darüber hinaus umfasst die Erfindung auch Ausführungsformen, bei denen die Verarbeitungslogik Teil einer weiteren, mit der betreffenden intelligenten Einheit zusammenwirkenden Einheit ist, wie beispielsweise eine zentrale Steuereinheit.

Die Erfindung sind ferner vor, dass die Konfigurationseinrichtung darüber hinaus zur Lagerung bzw. Speicherung von weiteren Informationen in zweckmäßiger Weise nutzbar ist, d.h. dass beispielsweise auch Laufzeitinformationen in diesem abgelegt und auslesbar sind.

Die Erfindung umfasst ferner Ausführungsformen, bei welchen die in den Konfigurationseinrichtungen gespeicherten Daten ferngesteuert und/oder extern veränderbar, auslesbar und/oder in anderer Weise verarbeitbar, insbesondere weiterverarbeitbar sind, beispielsweise durch eine dezentrale Zuordnungseinheit mit entsprechender Verarbeitungslogik.

Darüber hinaus ist die Erfindung anwendungsspezifisch derart einsetzbar, dass das jeweilige Speichern und/oder Auslesen der applikations- und/oder ortsbasierten Daten als einmaliger Vorgang, also insbesondere nach dem Einbinden und/oder Austauschen einer intelligenten Einheit durchgeführt wird und/oder bevorzugt als wiederholbarer Vorgang durchgeführt wird, um beispielsweise nach wählbaren bzw. definierten Zeitintervallen eine Aktualisierung oder Adaption der Konfigurationsdaten der intelligenten Einheiten sicherzustellen.

Die erfindungsgemäß bereitgestellte "Plug & Play" Lösung ist somit in praktischer Weise bei im Wesentlichen allen Netzwerksystemen, wie z.B. auch dem Ethernet einsetzbar und ermöglicht die einfache Anbindung und sichere Adressierung von im Wesentlichen allen Eingabe-/Ausgabeeinheiten, die eine intelligente Verarbeitungslogik umfassen.

Auch wenn die Erfindung in Bezug auf den Einsatz bei Automatisierungsanlagen beschrieben worden ist, sei ferner darauf hingewiesen, dass weitere bevorzugte Anwendungsgebiete der Erfindung insbesondere die Bereiche des Personentransports, und der Gebäudeleittechnik betreffen.

## Patentansprüche

1. Verfahren zur Anpassung einer intelligenten Einheit an einen Kopplungsort (2) der intelligenten Einheit, umfassend die Schritte:
Verbinden einer Konfigurationseinrichtung (21, 22, 24, 25) mit dem Kopplungsort (2), wobei die Konfigurationseinrichtung (21, 22, 24, 25) Teil einer stehenden Verdrahtung ist, an welche die intelligente Einheit (11, 12, 13, 14, 15) koppelbar ist, oder einer an dem Kopplungsort (2) angeordneten Verbindungseinrichtung zum Verbinden der intelligenten Einheit (11, 12, 13, 14, 15) zugeordnet ist,
Speichern von Konfigurationsdaten und/oder Verhaltensbeschreibungsdaten, welche jeweils ortsbasiert sind, in der Konfigurationseinrichtung (21, 22, 24, 25) derart, dass diese von der Konfigurationseinrichtung (21, 22, 24, 25) an eine Logik zum Verarbeiten der Konfigurationsdaten und/oder Verhaltensbeschreibungsdaten zur Anpassung der intelligenten Einheit (11, 12, 13, 14, 15) übertragbar sind,
Bereitstellen der intelligenten Einheit (11, 12, 13, 14, 15) mit zugeordneter Logik zum Verarbeiten der Konfigurationsdaten und/oder Verhaltensbeschreibungsdaten,
Koppeln der intelligenten Einheit mit der stehenden Verdrahtung oder der Verbindungseinrichtung,
Verbinden der intelligenten Einheit mit der Konfigurationseinrichtung (21, 22, 24, 25), und
Übertragen der Konfigurationsdaten und/oder Verhaltensbeschreibungsdaten von der Konfigurationseinrichtung (21, 22, 24, 25) an die Logik.

2. Verfahren nach Anspruch 1, ferner **dadurch gekennzeichnet, dass**
Daten der intelligenten Einheit (11, 12, 13, 14, 15) an die Konfigurationseinrichtung (21, 22, 24, 25) übertragen und dort gespeichert werden.

3. Verfahren nach Anspruch 1 oder 2, ferner **dadurch gekennzeichnet, dass**
zwischen der intelligenten Einheit (11, 12, 13, 14, 15) und der Konfigurationseinrichtung (21, 22, 24, 25) ein Datenabgleich durchgeführt wird.

4. Verfahren nach einem der vorstehenden Ansprüche, ferner **dadurch gekennzeichnet, dass**
die intelligente Einheit (11, 12, 13, 14, 15) innerhalb eines Netzwerkes eingebunden wird.

5. Verfahren nach einem der vorstehenden Ansprüche, ferner **dadurch gekennzeichnet, dass**
das Speichern und/oder das Übertragen der Konfigurationsdaten und/oder Verhaltensbeschreibungsdaten, welche jeweils ortsbasiert sind, als einmaliger oder als wiederholbarer Schritt durchgeführt wird.

6. Verfahren nach einem der vorstehenden Ansprüche, ferner **dadurch gekennzeichnet, dass**
das Speichern und/oder das Übertragen der Konfigurationsdaten und/oder Verhaltensbeschreibungsdaten, welche jeweils ortsbasiert sind, gesichert erfolgt.

7. Vorrichtung zur Durchführung des Verfahren nach einem der Ansprüche 1 bis 6.

8. Vorrichtung nach Anspruch 7, umfassend
eine intelligente Einheit (11, 12, 13, 14, 15) mit einer zugeordneten Logik zum Verarbeiten von Konfigurationsdaten und/oder Verhaltensbeschreibungsdaten der intelligenten Einheit (11, 12, 13, 14, 15) und
eine mit einem Kopplungsort (2) der intelligenten Einheit (11, 12, 13, 14, 15) verbundene Konfigurationseinrichtung (21, 22, 24, 25) zum Speichern der Konfigurationsdaten und/oder Verhaltensbeschreibungsdaten, welche jeweils ortsbasiert sind, wobei die Konfigurationseinrichtung (21, 22, 24, 25) Teil einer stehenden Verdrahtung ist, an welche die intelligente Einheit (11, 12, 13, 14, 15) koppelbar ist, oder einer an dem Kopplungsort (2) angeordneten Verbindungseinrichtung zum Verbinden der intelligenten Einheit (11, 12, 13, 14, 15) zugeordnet ist, wobei
die intelligente Einheit (11, 12, 13, 14, 15) und die Konfigurationseinrichtung (21, 22, 24, 25) derart miteinander verbindbar sind, dass die Konfigurationsdaten und/oder Verhaltensbeschreibungsdaten zumindest von der Konfigurationseinrichtung (21, 22, 24, 25) an die Logik zur Anpassung der intelligenten Einheit an den Kopplungsort übertragbar sind.

9. Vorrichtung nach Anspruch 7, umfassend
eine einem Kopplungsort (2) einer intelligenten Einheit (11, 12, 13, 14, 15) zugeordnete Konfigurationseinrichtung (21, 22, 24, 25) zum Speichern von Konfigurationsdaten und/oder Verhaltensbeschreibungsdaten, welche jeweils ortsbasiert sind, wobei die Konfigurationseinrichtung (21, 22, 24, 25) Teil einer stehenden Verdrahtung ist, an welche die intelligente Einheit (11, 12, 13, 14, 15) koppelbar ist, oder einer an dem Kopplungsort (2) angeordneten Verbindungseinrichtung zum Verbinden der intelligenten Einheit (11, 12, 13, 14, 15) zugeordnet ist, wobei
die Konfigurationseinrichtung (21, 22, 24, 25) mit einer Logik zum Verarbeiten der Konfigurationsdaten und/oder Verhaltensbeschreibungsdaten der intelligenten Einheit (11, 12, 13, 14, 15) derart verbindbar ist, dass die Konfigurationsdaten und/oder Verhaltensbeschreibungsdaten zumindest von der Konfigurationseinrichtung (21, 22, 24, 25) an die Logik übertragbar sind.

10. Vorrichtung nach Anspruch 7, umfassend
eine intelligente Einheit (11, 12, 13, 14, 15) mit zugeordneter Logik zum Verarbeiten von Konfigurationsdaten und/oder Verhaltensbeschreibungsdaten, wobei
die intelligente Einheit (11, 12, 13, 14, 15) mit einer einem Kopplungsort (2) der intelligenten Einheit zugeordneten Konfigurationseinrichtung (21, 22, 24, 25), wobei die Konfigurationseinrichtung (21, 22, 24, 25) Teil einer stehenden Verdrahtung ist, an welche die intelligente Einheit (11, 12, 13, 14, 15) koppelbar ist, oder einer an dem Kopplungsort (2) angeordneten Verbindungseinrichtung zum Verbinden der intelligenten Einheit (11, 12, 13, 14, 15) zugeordnet ist, zum Speichern der Konfigurationsdaten und/oder Verhaltensbeschreibungsdaten, welche jeweils ortsbasiert sind, derart verbindbar ist, dass die Konfigurationsdaten und/oder Verhaltensbeschreibungsdaten zumindest von der Konfigurationseinrichtung (21, 22, 24, 25) an die Logik zur Anpassung der intelligenten Einheit an den Kopplungsort übertragbar sind.

11. Vorrichtung nach einem der Ansprüche 7 bis 10, ferner **gekennzeichnet dadurch, dass**
die intelligente Einheit (11, 12, 13, 14, 15) innerhalb eines Netzwerkes eingebunden ist.

12. Vorrichtung nach einem der Ansprüche 7 bis 11, ferner **gekennzeichnet dadurch, dass**
die intelligente Einheit (11, 12, 13, 14, 15) eine Anlagenkomponente umfasst.

13. Vorrichtung nach einem der Ansprüche 7 bis 12, ferner **gekennzeichnet dadurch, dass**
die Konfigurationsdaten und/oder Verhaltensbeschreibungsdaten, welche jeweils ortsbasiert sind, eine Adresse, eine Komponentenkennung, Prarametrierungsdaten und/oder Daten zur Parametrierung umfassen.

14. Vorrichtung nach einem der Ansprüche 7 bis 13, ferner **gekennzeichnet dadurch, dass**
die der intelligenten Einheit (11, 12, 13, 14, 15) zugeordnete Logik zur Datenübertragung an die Konfigurationseinrichtung (21, 22, 24, 25) ausgebildet ist.

15. Vorrichtung nach einem der Ansprüche 7 bis 14, ferner **gekennzeichnet dadurch, dass**
die Konfigurationseinrichtung (21, 22, 24, 25) zum Empfangen und Speichern von Daten von der der intelligenten Einheit (11, 12, 13, 14, 15) zugeordneten Logik ausgebildet ist.

16. Vorrichtung nach einem der Ansprüche 7 bis 15, ferner **gekennzeichnet dadurch, dass**
die Konfigurationseinrichtung (21, 22, 24, 25) zum Speichern, Auslesen und/oder Verarbeiten von weiteren Daten ausgebildet ist.

17. Vorrichtung nach einem der Ansprüche 7 bis 16, ferner **gekennzeichnet dadurch, dass**
das die Konfigurationsdaten und/oder Verhaltensbeschreibungsdaten der Konfigurationseinrichtung (21, 22, 24, 25) ferngesteuert und/oder extern veränderbar, auslesbar und/oder verarbeitbar sind.

18. Vorrichtung nach einem der Ansprüche 7 bis 17, ferner **gekennzeichnet dadurch, dass**
die Konfigurationseinrichtung (21, 22, 24, 25) und die intelligente Einheit (11, 12, 13, 14, 15) komplementär ausgebildete Mittel zum Bereitstellen einer unidirektionalen und/oder bidirektionalen Datenübertragungsverbindung umfassen, insbesondere unter Verwendung von schraub- und/oder steckbaren Verbindern, einer kontaktgebundenen, optischen und/oder einer Funkverbindung.

19. Vorrichtung nach einem der Ansprüche 7 bis 18, ferner **gekennzeichnet dadurch, dass**
die Konfigurationseinrichtung (21, 22, 24, 25) als Betriebsmittel für eine Automatisierungsanlage ausgebildet ist.

20. Vorrichtung nach einem der Ansprüche 7 bis 19, ferner **gekennzeichnet dadurch, dass**
die Konfigurationseinrichtung (21, 22, 24, 25) und/oder die Logik Hardware- und/oder Softwareelemente umfassen.

21. Vorrichtung nach einem der Ansprüche 7 bis 20, ferner **gekennzeichnet dadurch, dass**
die der Konfigurationseinrichtung (21, 22, 24, 25) zugeordnete Logik Teil der Konfigurationseinrichtung oder Teil einer weiteren, mit der Konfigurationseinrichtung verbindbaren Einrichtung, insbesondere zentralen Steuerungseinrichtung ist.

22. Verwendung einer Vorrichtung nach einem der Ansprüche 7 bis 21 zur Durchführung eines Verfahrens nach einem der Ansprüche 1 bis 6.

23. System mit wenigstens einer Vorrichtung nach einem der Ansprüche 7 bis 21.

24. System nach Anspruch 23, welches zum Betreiben einer Automatisierungsanlage angepasst ist.

## Claims

1. Method for adapting an intelligent unit to a coupling location (2) of the intelligent unit, including the steps of:
connecting a configuration device (21,22, 24, 25) to the coupling location (2), wherein the configuration device (21, 22, 24, 25) is part of a fixed wiring system to which the intelligent unit (11, 12, 13, 14, 15) can be coupled, or is allocated to a connecting device disposed at the coupling location (2) to connect the intelligent unit (11, 12, 13, 14, 15),
storing configuration data and/or behaviour descriptive data, which are location-based in each case, in the configuration device (21, 22, 24, 25) such that these can be transmitted from the configuration device (21, 22, 24, 25) to a logic circuit for processing the configuration data and/or behaviour descriptive data for adapting the intelligent unit (11, 12, 13, 14, 15),
providing the intelligent unit (11, 12, 13, 14, 15) with an associated logic circuit for processing the configuration data and/or behaviour descriptive data,
coupling the intelligent unit to the fixed wiring system or the connecting device,
connecting the intelligent unit to the configuration device (21, 22, 24, 25), and
transmitting the configuration data and/or behaviour descriptive data from the configuration device (21, 22, 24, 25) to the logic circuit.

2. Method as claimed in Claim 1, further **characterised in that** data from the intelligent unit (11, 12,13, 14, 15) are transmitted to the configuration device (21, 22, 24, 25) and stored therein.

3. Method as claimed in Claim 1 or 2, further **characterised in that** data matching is effected between the intelligent unit (11, 12, 13,14,15) and the configuration device (21, 22, 24, 25).

4. Method as claimed in any one of the preceding Claims, further **characterised in that** the intelligent unit (11,12,13, 14, 15) is incorporated within a network.

5. Method as claimed in any one of the preceding Claims, further **characterised in that** the configuration data and/or behaviour descriptive data, which are location-based in each case, are stored and/or transmitted in a single or repeatable step.

6. Method as claimed in any one of the preceding Claims, further **characterised in that** the configuration data and/or behaviour descriptive data, which are location-based in each case, are stored and/or transmitted securely.

7. Apparatus for implementing the method as claimed in any one of Claims 1 to 6.

8. Apparatus as claimed in Claim 7, including
an intelligent unit (11,12,13, 14,15) having an associated logic circuit for processing configuration data and/or behaviour descriptive data of the intelligent unit (11, 12, 13, 14, 15) and
a configuration device (21, 22, 24, 25) connected to a coupling location (2) of the intelligent unit (11, 12, 13, 14, 15) for storing the configuration data and/or behaviour descriptive data, which are location-based in each case, wherein the configuration device (21, 22, 24, 25) is part of a fixed wiring system to which the intelligent unit (11, 12, 13, 14, 15) can be coupled, or is allocated to a connecting device disposed at the coupling location (2) to connect the intelligent unit (11, 12, 13, 14, 15), wherein
the intelligent unit (11, 12, 13, 14, 15) and the configuration device (21, 22, 24, 25) can be connected together such that the configuration data and/or behaviour descriptive data can be transmitted at least from the configuration device (21, 22, 24, 25) to the logic circuit to adapt the intelligent unit to the coupling location.

9. Apparatus as claimed in Claim 7, including
a configuration device (21, 22, 24, 25) allocated to a coupling location (2) of an intelligent unit (11,12,13,14,15) for storing configuration data and/or behaviour descriptive data which are location-based in each case, wherein the configuration device (21, 22, 24, 25) is part of a fixed wiring system to which the intelligent unit (11, 12, 13, 14, 15) can be coupled, or is allocated to a connecting device disposed at the coupling location (2) to connect the intelligent unit (11, 12, 13, 14, 15), wherein
the configuration device (21,22, 24,25) can be connected to a logic circuit for processing the configuration data and/or behaviour descriptive data of the intelligent unit (11, 12, 13, 14, 15) such that the configuration data and/or behaviour descriptive data can be transmitted at least from the configuration device (21, 22, 24, 25) to the logic circuit.

10. Apparatus as claimed in Claim 7, including
an intelligent unit (11, 12, 13, 14, 15) having an associated logic circuit for processing configuration data and/or behaviour descriptive data, wherein
the intelligent unit (11, 12, 13, 14,15) can be connected to a configuration device (21,22,24,25) allocated to a coupling location (2) of the intelligent unit - wherein the configuration device (21, 22, 24, 25) is part of a fixed wiring system to which the intelligent unit (11, 12, 13, 14, 15) can be coupled, or is allocated to a connecting device disposed at the coupling location (2) to connect the intelligent unit (11, 12, 13, 14, 15) to store the configuration data and/or behaviour descriptive data, which are location-based in each case - such that the configuration data and/or behaviour descriptive data can be transmitted at least from the configuration device (21, 22, 24, 25) to the logic circuit to adapt the intelligent unit to the coupling location.

11. Apparatus as claimed in any one of Claims 7 to 10, further **characterised in that** the intelligent unit (11, 12, 13, 14, 15) is incorporated within a network.

12. Apparatus as claimed in any one of Claims 7 to 11, further **characterised in that** the intelligent unit (11, 12, 13, 14, 15) includes a system component.

13. Apparatus as claimed in any one of Claims 7 to 12, further **characterised in that** the configuration data and/or behaviour descriptive data, which are location-based in each case, include an address, a component identification, parameterisation data and/or data for parameterisation.

14. Apparatus as claimed in any one of Claims 7 to 13, further **characterised in that** the logic circuit allocated to the intelligent unit (11, 12, 13, 14, 15) is formed so as to transmit data to the configuration device (21, 22, 24, 25).

15. Apparatus as claimed in any one of Claims 7 to 14, further **characterised in that** the configuration device (21, 22, 24, 25) is formed so as to receive and store data from the logic circuit allocated to the intelligent unit (11, 12, 13, 14, 15).

16. Apparatus as claimed in any one of Claims 7 to 15, further **characterised in that** the configuration device (21, 22, 24, 25) is formed so as to store, read and/or process further data.

17. Apparatus as claimed in any one of Claims 7 to 16, further **characterised in that** the the [*sic*] configuration data and/or behaviour descriptive data of the configuration device (21, 22, 24, 25) can be amended, read out and/or processed via remote control and/or externally.

18. Apparatus as claimed in any one of Claims 7 to 17, further **characterised in that** the configuration device (21, 22, 24, 25) and the intelligent unit (11, 12, 13, 14, 15) include complementarily formed means for providing a unidirectional and/or bidirectional data transmitting connection, in particular using screwable and/or pluggable connectors, a connection via contacts, an optical connection and/or a radio connection.

19. Apparatus as claimed in any one of Claims 7 to 18, further **characterised in that** the configuration device (21, 22, 24, 25) is formed as operating means for an automation system.

20. Apparatus as claimed in any one of Claims 7 to 19, further **characterised in that** the configuration device (21, 22, 24, 25) and/or the logic circuit include hardware and/or software elements.

21. Apparatus as claimed in any one of Claims 7 to 20, further **characterised in that** the logic circuit allocated to the configuration device (21, 22, 24, 25) is part of the configuration device or part of a further device, which can be connected to the configuration device, in particular a central control device.

22. Use of an apparatus as claimed in any one of Claims 7 to 21 for implementing a Method as claimed in any one of Claims 1 to 6.

23. System having at least one device as claimed in any one of Claims 7 to 21.

24. System as claimed in Claim 23 which is adapted to operate an automation system.

## Revendications

1. Procédé pour adapter une unité intelligente à un lieu de couplage (2) de l'unité intelligente, comprenant les étapes suivantes :
liaison d'un dispositif de configuration (21, 22, 24, 25) avec le lieu de couplage (2), le dispositif de configuration (21, 22, 24, 25) faisant partie d'un câblage fixe, avec lequel l'unité (11, 12, 13, 14, 15) intelligente peut être couplée, ou étant associé à un dispositif de liaison disposé sur le lieu de couplage (2) pour la liaison de l'unité (11, 12, 13, 14, 15) intelligente,
stockage de données de configuration et/ou de données de description de comportement, lesquelles sont respectivement géodépendantes, dans le dispositif de configuration (21, 22, 24, 25) de telle sorte que ces données peuvent être transmises du dispositif de configuration (21, 22, 24, 25) à une logique pour le traitement des données de configuration et/ou des données de description de comportement pour l'adaptation de l'unité (11, 12, 13, 14, 15) intelligente,
mise à disposition de l'unité (11, 12, 13, 14, 15) intelligente avec logique associée pour le traitement des données de configuration et/ou des données de description de comportement,
couplage de l'unité intelligente avec le câblage fixe ou le dispositif de liaison,
liaison de l'unité intelligente avec le dispositif de configuration (21, 22, 24, 25), et
transmission des données de configuration et/ou des données de description de comportement du dispositif de configuration (21, 22, 24, 25) à la logique.

2. Procédé selon la revendication 1, **caractérisé** également en ce que
des données de l'unité (11, 12, 13, 14, 15) intelligente sont transmises au dispositif de configuration (21, 22, 24, 25) et y sont stockées.

3. Procédé selon la revendication 1 ou 2, **caractérisé** également en ce que
un ajustement de données est effectué entre l'unité (11, 12, 13, 14, 15) intelligente et le dispositif de configuration (21, 22, 24, 25).

4. Procédé selon l'une quelconque des revendications précédentes, **caractérisé** également en ce que
l'unité (11, 12, 13, 14, 15) intelligente est intégrée à l'intérieur d'un réseau.

5. Procédé selon l'une quelconque des revendications précédentes, **caractérisé** également en ce que
le stockage et/ou la transmission des données de configuration et/ou des données de description de comportement, qui sont respectivement géodépendantes, est effectué en tant qu'une étape unique ou en tant qu'étape récurrente.

6. Procédé selon l'une quelconque des revendications précédentes, **caractérisé** également en ce que
le stockage et/ou la transmission des données de configuration et/ou des données de description de comportement, qui sont respectivement géodépendantes, s'effectue de façon sécurisée.

7. Dispositif pour la mise en oeuvre du procédé selon l'une quelconque des revendications 1 à 6.

8. Dispositif selon la revendication 7, comprenant
une unité (11, 12, 13, 14, 15) intelligente avec une logique associée pour le traitement de données de configuration et/ou de données de description de comportement de l'unité (11, 12, 13, 14, 15) intelligente et
un dispositif de configuration (21, 22, 24, 25) relié à un lieu de couplage (2) de l'unité (11, 12, 13, 14, 15) intelligente pour le stockage des données de configuration et/ou des données de description de comportement, qui sont respectivement géodépendantes, le dispositif de configuration (21, 22, 24, 25) faisant partie d'un câblage fixe, avec lequel l'unité (11, 12, 13, 14, 15) intelligente peut être couplée, ou étant associé à un dispositif de liaison disposé sur le lieu de couplage (2) pour la liaison de l'unité (11, 12, 13, 14, 15) intelligente,
l'unité (11, 12, 13, 14, 15) intelligente et le dispositif de configuration (21, 22, 24, 25) pouvant être reliés l'un à l'autre de telle sorte que les données de configuration et/ou les données de description de comportement peuvent être transmises au moins du dispositif de configuration (21, 22, 24, 25) à la logique pour l'adaptation de l'unité intelligente au lieu de couplage.

9. Dispositif selon la revendication 7, comprenant
un dispositif de configuration (21, 22, 24, 25) associé à un lieu de couplage (2) d'une unité (11, 12, 13, 14, 15) intelligente pour le stockage de données de configuration et/ou de données de description de comportement, qui sont respectivement géodépendantes, le dispositif de configuration (21, 22, 24, 25) faisant partie d'un câblage fixe, avec lequel l'unité (11, 12, 13, 14, 15) intelligente peut être couplée, ou étant associé à un dispositif de liaison disposé sur le lieu de couplage (2) pour la liaison de l'unité (11, 12, 13, 14, 15) intelligente,
le dispositif de configuration (21, 22, 24, 25) pouvant être relié à une logique pour le traitement des données de configuration et/ou des données de description de comportement de l'unité (11, 12, 13, 14, 15) intelligente de telle sorte que les données de configuration et/ou les données de description de comportement peuvent être transmises au moins du dispositif de configuration (21, 22, 24, 25) à la logique.

10. Dispositif selon la revendication 7, comprenant une unité (11, 12, 13, 14, 15) intelligente avec logique associée pour le traitement de données de configuration et/ou de données de description de comportement,
l'unité (11, 12, 13, 14, 15) intelligente pouvant être reliée à un dispositif de configuration (21, 22, 24, 25) associé à un lieu de couplage (2) de l'unité (11, 12, 13, 14, 15) intelligente, le dispositif de configuration (21, 22, 24, 25) faisant partie d'un câblage fixe, avec lequel l'unité (11, 12, 13, 14, 15) intelligente peut être couplée, ou étant associé à un dispositif de liaison disposé sur le lieu de couplage (2) pour la liaison de l'unité (11, 12, 13, 14, 15) intelligente, pour le stockage des données de configuration et/ou des données de description de comportement, qui sont respectivement géodépendantes, de telle sorte que les données de configuration et/ou données de description de comportement peuvent être transmises au moins du dispositif de configuration (21, 22, 24, 25) à la logique pour l'adaptation de l'unité intelligente au lieu de couplage.

11. Dispositif selon l'une quelconque des revendications 7 à 10, **caractérisé** également en ce que
l'unité (11, 12, 13, 14, 15) intelligente est intégrée à l'intérieur d'un réseau.

12. Dispositif selon l'une quelconque des revendications 7 à 11, **caractérisé** également en ce que
l'unité (11, 12, 13, 14, 15) intelligente comprend une composante d'installation.

13. Dispositif selon l'une quelconque des revendications 7 à 12, **caractérisé** également en ce que
les données de configuration et/ou les données de description de comportement, qui sont respectivement géodépendantes, comprennent une adresse, un codage de composant, des données de paramétrage et/ou des données pour le paramétrage.

14. Dispositif selon l'une quelconque des revendications 7 à 13, **caractérisé** également en ce que
la logique associée à l'unité (11, 12, 13, 14, 15) intelligente est conçue pour la transmission de données au dispositif de configuration (21, 22, 24, 25).

15. Dispositif selon l'une quelconque des revendications 7 à 14, **caractérisé** également en ce que
le dispositif de configuration (21, 22, 24, 25) est conçu pour la réception et le stockage de données de la logique associée à l'unité (11, 12, 13, 14, 15) intelligente.

16. Dispositif selon l'une quelconque des revendications 7 à 15, **caractérisé** également en ce que
le dispositif de configuration (21, 22, 24, 25) est conçu pour le stockage, la lecture et/ou le traitement d'autres données.

17. Dispositif selon l'une quelconque des revendications 7 à 16, **caractérisé** également en ce que
les données de configuration et/ou données de description de comportement du dispositif de configuration (21, 22, 24, 25) peuvent être modifiées, lues et/ou traitées de façon télécommandée et/ou de façon externe.

18. Dispositif selon l'une quelconque des revendications 7 à 17, **caractérisé** également en ce que
le dispositif de configuration (21, 22, 24, 25) et l'unité (11, 12, 13, 14, 15) intelligente comprennent des moyens conçus de façon complémentaire pour la mise à disposition d'une liaison de transmission de données unidirectionnelle et/ou bidirectionnelle, en particulier avec l'utilisation de connecteurs vissables et/ou enfichables, d'une liaison reliée par contact, optique et/ou d'une liaison radio.

19. Dispositif selon l'une quelconque des revendications 7 à 18, **caractérisé** également en ce que
le dispositif de configuration (21, 22, 24, 25) est conçu comme moyen d'exploitation pour une installation d'automatisation.

20. Dispositif selon l'une quelconque des revendications 7 à 19, **caractérisé** également en ce que
le dispositif de configuration (21, 22, 24, 25) et/ou la logique comprennent des éléments de matériel et/ou de logiciel.

21. Dispositif selon l'une quelconque des revendications 7 à 20, **caractérisé** également en ce que
la logique associée au dispositif de configuration (21, 22, 24, 25) fait partie du dispositif de configuration ou fait partie d'un autre dispositif pouvant être relié au dispositif de configuration, en particulier au dispositif de commande centrale.

22. Utilisation d'un dispositif selon l'une quelconque des revendications 7 à 21 pour la mise en oeuvre d'un procédé selon l'une quelconque des revendications 1 à 6.

23. Système comprenant au moins un dispositif selon l'une quelconque des revendications 7 à 21.

24. Système selon la revendication 23, qui est adapté pour l'utilisation d'une installation d'automatisation.
